# EUROPEAN PATENT APPLICATION

(11) **EP 1 569 259 A1**
(43) Date of publication of application: **31.08.2005**
(21) Application number: 05290286.3
(22) Date of filing: 09.02.2005
(51) Int. Cl.: H01J 31/12

(54) **Field emission display device**

(30) Priority: 25.02.2004 KR 2004012725; 25.02.2004 KR 2004012726
(71) Applicant: LG ELECTRONICS INC., Seoul (KR)
(72) Inventor: Moon, Seong-Hak, Guro-Gu Seoul (KR)
(74) Representative: Loisel, Bertrand

(57) **Abstract**

A field emission display (FED) device prevents a phenomenon that a cross talk occurs among neighboring cells by preventing distortion of electron beam and enhances luminance. The FED device includes a gate electrode (110) and an insulation layer (120) sequentially formed on a substrate; a cathode electrode (130) formed on the insulation layer and crossing the gate electrode; a carbon nano tube (CNT) (150) formed on the cathode electrode and having a smaller length than the gate electrode; and an auxiliary electrode (140) formed parallel to the cathode electrode.

## Description

### BACKGROUND OF THE INVENTION

### 1. Field of the Invention

The present invention relates to a field emission display (FED) and, more particularly, to an FED device.

### 2. Description of the Prior Art

Recently, demands on displays are increasing according to rapid development of information communications technologies and displays are variably changing in their structure. For example, in an environment requiring mobility, a light, small and low power-consuming display such as a mobile information communication device is required, while when the display is used as a general information transmission medium, a display with a large screen such as a CRT (Cathode Ray Tube), an LCD (Liquid Crystal Display), a PDP (Plasma Display Panel), a VFD (Vacuum Fluorescent Display) is required. Thus, development of an FED that can provide high resolution as well as reduce a size and power consumption is being actively made.

The FED receives attention as a flat panel display for next-generation information communication as it overcomes shortcomings of currently developed or mass-produced flat panel displays (e.g., LCD, PDP, VFD, etc.,). The FED device has a simple electrode structure, can be operated at a high speed such as the CRT, and has merits of a limitless color, limitless gray scale and high luminance that a display is expected to have.

Lately, an FED device having a carbon nano tube (CNT) is commonly used. The CNT is mechanically strong, chemically stable and excellent in electron emission characteristics at a low degree of vacuum. Having a smaller diameter (approximately 1.0~scores of nm), the CNT has a superior field enhancement factor to an emitter having a micro tip, and thus can emit electrons at a low turn-on field (approximately 1.0~5.0V/µm). Thus, by applying the CNT to the FED device, a power loss and production unit cost of the FED device can be reduced.

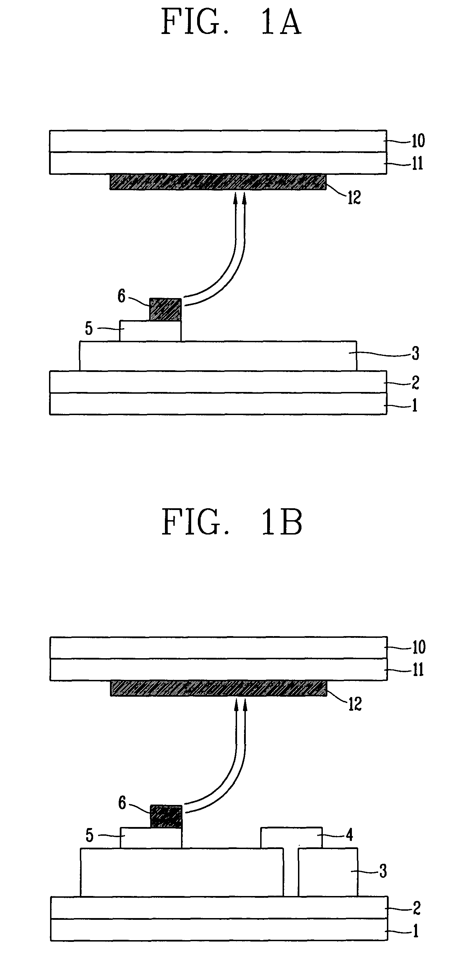

A structure of the FED device having the CNT will now be described with reference to Figures 1A and 1B.

Figure 1A is a sectional view showing the structure of an FED device in accordance with a prior art.

As shown in Figure 1A, a prior FED device includes an anode electrode 11 formed on an upper glass substrate 10; a phosphor layer 12 formed on the anode electrode 11; a lower glass substrate 1; a gate electrode 2 formed on the lower glass substrate; an insulation layer 3 formed on the gate electrode 2; a cathode electrode 5 formed on the insulation layer 3; and a CNT 6 formed on the cathode electrode 5.

A high voltage is applied to the anode electrode 11 and then a threshold voltage is applied to the gate electrode 2 and the cathode electrode 5. Then, electrons (electron beam) generated from an edge of the CNT 6 formed on the cathode electrode 5 are bent in the direction of the gate electrode 2 and emitted in the direction of the anode electrode. The electrons emitted in the direction of the anode electrode are accelerated by the high voltage that has been applied to the anode electrode 11 to collide with the phosphor layer 12 formed on the anode electrode 11. At this time, the phosphor layer 12 is excited by the electron beam to emit visible rays.

The process of the prior FED device is easy, but in order to drive the FED device, a high voltage must be applied to the gate electrode 2 and the cathode electrode 5, increasing power consumption. In addition, since electric charge is charged in the insulation layer 3 positioned between the electrodes 2 and 5, field is distorted.

In an effort to reduce power consumption and prevent distortion of field, an FED as shown in Figure 1 B has been developed.

Figure 1 B is a sectional view showing the structure of a different FED device in accordance with a prior art.

As shown in Figure 1 B, the FED device includes an anode electrode 11 formed on an upper glass substrate 10; a phosphor layer 12 formed on the anode electrode 11; a lower glass substrate 1; a gate electrode 2 formed on the lower glass substrate 1; an insulation layer 3 formed on the gate electrode 2; a cathode electrode formed on the insulation layer 3; a CNT 6 formed on the cathode electrode 5; and a counter electrode 4 connected to the gate electrode exposed through a via hole of the insulation layer 3 and formed on the same plane of the cathode electrode 5.

The FED device is advantageous in that its driving voltage is low and it has high efficiency compared to the FED device of Figure 1A, but since it includes a process with a high level of difficulty, its yield is low and a fabrication cost increases. In addition, electric charge is charged/discharged through a surface of the insulation layer 3 exposed between the cathode electrode 5 and the counter electrode 4.

When the surface of the insulation layer 3 is exposed, charging and discharging phenomenon occurs frequently over time to distort electric field or emit abnormal electron beams.

In addition, since the CNT of the FED device of Figures 1A and 1 B is exposed at the uppermost layer, an abnormal electron beam is easily generated by the anode field, degrading display quality of the FED device.

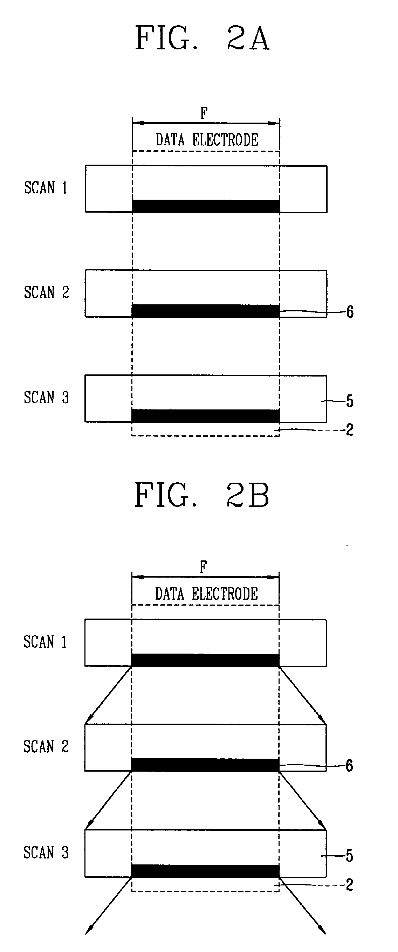

Figures 2A and 2B are plan views for explaining a locus of an electron beam generated from the prior FED device. Especially, Figures 2A and 2B are plan views for explaining a locus of an electron beam generated from the FED device of Figure 1A.

As shown in Figure 2A, a CNT 6 with the same length (F) as the gate electrode 2 is generally formed on the cathode electrode (scan electrode) 5 disposed to cross vertically the gate electrode (data electrode) 2. Namely, the length of the CNT of Figure 1A is the same as that of the CNT of Figure 1 B.

With reference to Figure 2B, if the CNT 6 having the same length (F) as that of the gate electrode 2 is formed, many electrons are emitted but electrons (electron beam) spread in left and right direction of the gate electrode 2. Namely, electrons emitted from the CNT downwardly proceed in the direction of the gate electrode 2, and then are accelerated to the phosphor layer 12 by the high anode field, and because electrons are mostly emitted from both edges of the CNT 6, electron beam is widely spread. The widely spread electron beam reaches the phosphor layer of adjacent cells, causing problems of generation of a cross talk and degradation of contrast of an image.

As mentioned above, the prior FED device having the CNT has many problems as follows.

That is, power consumption is high, and as electric charges are charged at the insulation layer 3 positioned between the electrodes 2 and 5, electric field is distorted.

In addition, a process is complicate, a fabrication cost increases, and since the distorted electron beam reaches the phosphor layers of neighboring cells, cross talk occurs among neighboring cells.

Moreover, since the distorted electron beam excites only a portion of the phosphor layer, uniformity of a screen is degraded.

US Patent Nos. 6,169,372, 6,646,282 and 6,672,926 also disclose techniques of the FED device.

### SUMMARY OF THE INVENTION

Therefore, one object of the present invention is to provide an FED (Field Emission Display) device capable of preventing distortion of electron beam.

Another object of the present invention is to provide an FED device capable of preventing a phenomenon that a cross talk occurs among neighboring cells by concentrating electron beams into a cell (FED device).

Still another object of the present invention is to provide an FED device capable of enhancing luminance by focusing electron beams into cell (FED device).

To achieve these and other advantages and in accordance with the purpose of the present invention, as embodied and broadly described herein, there is provided an FED device including: a gate electrode and an insulation layer sequentially formed on a substrate; a cathode electrode formed on the insulation layer and crossing the gate electrode; a CNT (Carbon Nano Tube) formed on the cathode electrode and having a smaller length than the gate electrode; and an auxiliary electrode formed parallel to the cathode electrode.

To achieve the above object, there is also provided an FED device including: a gate electrode and an insulation layer sequentially formed on a substrate; a cathode electrode formed on the insulation layer, crossing the gate electrode and having a pair of electrodes; a CNT formed on each of the pair of electrodes and having a smaller length than the gate electrode; and an auxiliary electrode formed parallel to the pair of electrodes and having an outrigger formed with a smaller length than the CNT, wherein one side of the pair of electrodes is electrically connected with each other and the outrigger is extended from the auxiliary electrode so as to be adjacent to the CNT.

To achieve the above object, there is also provided an FED device including: an upper glass substrate; an anode electrode formed on the upper glass substrate; a phosphor layer formed on the anode electrode; a lower glass substrate; a gate electrode formed on the lower glass substrate; an insulation layer formed on the gate electrode; a cathode electrode formed on the insulation layer, crossing the gate electrode and having a pair of electrodes, one side of the pair of electrodes being electrically connected to each other; a CNT formed on a boundary surface of the pair of electrodes and having a smaller length than the gate electrode; and an auxiliary electrode formed parallel to the pair of electrodes and having an outrigger formed with a smaller length than the CNT, wherein the outrigger is extended from the auxiliary electrode so as to be adjacent to the CNT, and the CNT is formed on both boundary surfaces of the pair of electrodes so as to face the auxiliary electrode.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1A is a sectional view showing the structure of an FED in accordance with one prior art;
Figure 1B is a sectional view showing the structure of an FED in accordance with another prior art;
Figures 2A and 2B are plan views for explaining a locust of an electron beam generated from the FED device in accordance with a prior art;
Figure 3 is a plan view showing the construction of FED device in accordance with a first embodiment of the present invention;
Figure 4A is an enlarged view showing the structure of the FED device in accordance with the first embodiment of the present invention;
Figure 4B is a conceptual view showing a locus of an electron beam of the FED device;
Figure 5 shows voltage waveforms showing one method for driving the FED device in accordance with the first embodiment of the present invention;
Figure 6 shows a voltage waveform showing another method for driving the FED device in accordance with the first embodiment of the present invention;
Figure 7 is a plan view showing the construction of FED device in accordance with a second embodiment of the present invention;
Figure 8A is an enlarged view showing the structure of an FED device in accordance with the second embodiment of the present invention;
Figure 8B is a conceptual view showing a locus of an electron beam of the FED device in accordance with the second embodiment of the present invention;
Figure 9 is a plan view showing the construction of an FED device in accordance with a third embodiment of the present invention;
Figure 10 is a plan view showing the construction of an FED device in accordance with a fourth embodiment of the present invention;
Figure 11 is a plan view showing the construction of an FED device in accordance with a fifth embodiment of the present invention; and
Figure 12 is a plan view showing the construction of an FED device in accordance with a sixth embodiment of the present invention.

### DETAILED DESCRIPTION OF THE PREFERRED EMBODIMENTS

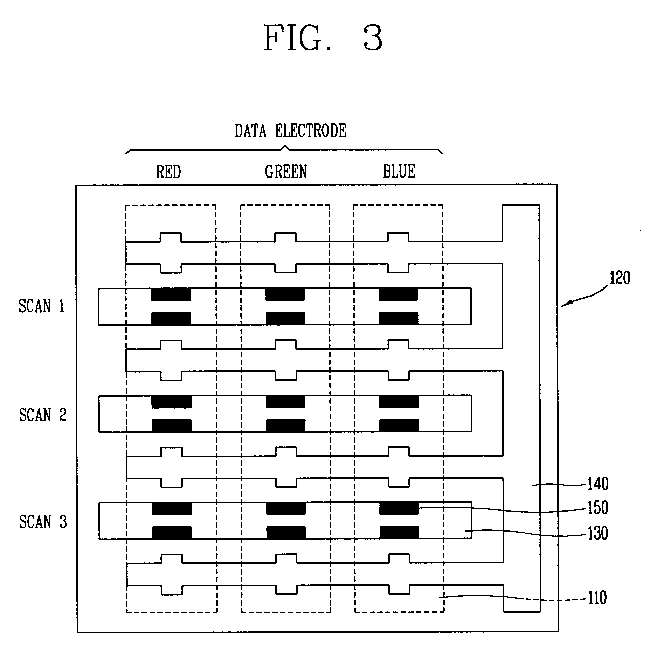

Figure 3 is a plan view showing the construction of an FED device in accordance with a first embodiment of the present invention.

An upper glass substrate, an anode electrode and a phosphor layer of the present invention is the same as those of the conventional art, descriptions of which are thus omitted.

As shown in Figure 3, an FED device in accordance with a first embodiment of the present invention includes: a gate electrode (data electrode) 110 and an insulation layer 120 sequentially formed on a lower glass substrate (not shown); a cathode electrode (scan electrode) 130 formed on the insulation layer 120 and crossing the gate electrode 110; CNTs 150 formed on the cathode electrode 130 and having a smaller length than the gate electrode 110; and an auxiliary electrode 140 formed parallel to the cathode electrode 130 and having an outrigger with a smaller length than the CNTs 150. Namely, the FED device in accordance with the first embodiment of the present invention includes the auxiliary electrode 140 and the CNTs 50 formed at both sides of boundary surfaces of the cathode electrode 130 in order to enhance efficiency of field emission.

Preferably, the outrigger is extended from the auxiliary electrode 140 and formed adjacent to the CNTs 150. Preferably, the CNTs 150 are formed at both sides of the boundary surfaces of the cathode electrode 130 and formed facing the outriggers of the auxiliary electrode 140. Preferably, the auxiliary electrodes are electrically connected to form as a single electrode.

The structure of the FED device in accordance with the first embodiment of the present invention will now be described.

First, the gate electrode 110 is formed on the lower glass substrate and the insulation layer 120 is formed on the gate electrode 110. The cathode electrode 130 is formed on the insulation layer 120.

The cathode electrode 130 is formed on the insulation layer 120 such that it crosses the gate electrode 110. The gate electrode 110 is used as a data electrode and the cathode electrode is used as a scan electrode.

Field is concentrated on a portion of an upper region of the cathode electrode 130 where the cathode electrode 130 crosses the gate electrode 110, so the CNTs 150 are formed on the crossed portion of the cathode electrode 130. The CNTs 150 are used as an emitter. By forming the CNTs 150 on the boundary surfaces of the cathode electrode 130, electron emission efficiency can be enhanced.

In the first embodiment of the present invention, relatively more electrons are emitted from both end surfaces, and thus, in order to concentrate electrons to the inside of a cell region (FED device), the length of the CNTs 150 are formed to be shorter than the length of the crossed region (namely, the length of the gate electrode 110).

The auxiliary electrode 140 is disposed parallel to the cathode electrode 130 and applies field required for driving of the FED device. In addition, by forming more outriggers at the auxiliary electrode 140, the surface of the insulation layer 120 is not exposed between the auxiliary electrode 140 and the cathode electrode 130, electric charges are not charged or discharged and thus a field distortion phenomenon does not occur. The auxiliary electrode 140 serves to concentrate electrodes emitted from the CNTs 150 into the cell.

The function of the auxiliary electrode 140 will be described in detail as follows.

While the FED device is being driven (namely, while the scan electrode is sequentially driven), the auxiliary electrode 140 receives a positive voltage to generate field, and efficiency of the FED device can be enhanced by the field generated by the auxiliary electrode 140. Namely, luminance can be enhanced by exciting electrons emitted from the CNTs 150.

Meanwhile, while the FED device is not driven, a ground voltage or a negative voltage is applied to the auxiliary electrode 140 to thereby restrain electron emission from the CNTs 150.

The auxiliary electrode 140 includes the outriggers protruded in the direction of the CNTs 150, reducing the area of the insulation layer 120 exposed between the auxiliary electrode 140 and the cathode electrode 130. In other words, by reducing the area of the insulation layer 120 exposed between the auxiliary electrode 140 and the cathode electrode 130, the phenomenon that electric charges are charged to or discharged from the insulation layer 120 can be prevented.

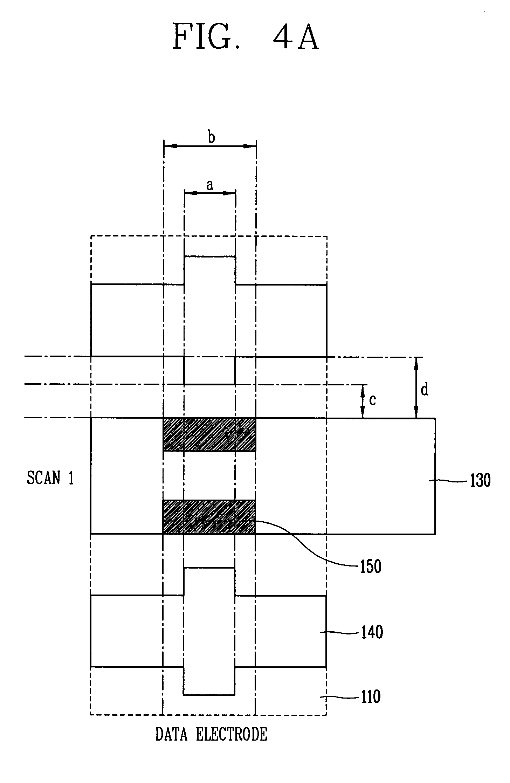

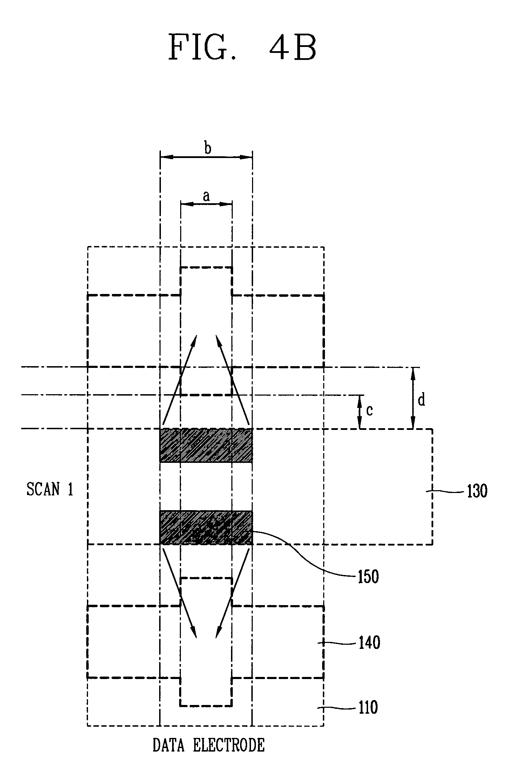

A method for concentrating electron beam emitted from the CNTs 150 into the cell (the FED device or field emission device) will be described in detail with reference to Figures 4A and 4B as follows.

Figure 4A is an enlarged view showing the structure of the FED device in accordance with the first embodiment of the present invention.

As shown in Figure 4A, referring to the disposition structure of the cathode electrode 130, the auxiliary electrode 140 and the CNTs 150, CNTs 150 are positioned on a boundary surfaces of the cathode electrode 130 and have a shorter length (B) than the data electrode 110.

The outrigger of the auxiliary electrode 140 is extended in the direction of the CNT 150, and the length (a) of the outrigger is formed shorter than the length (b) of the CNT 150. The surface region of the insulation layer 120 exposed from the region where field is generated can be reduced by making the distance (c) between the outrigger and the cathode electrode 130 shorter than the distance (d) between the auxiliary electrode 140 and the cathode electrode 130. Accordingly, electric charges cannot be charged to or discharged from the insulation layer 120 and electron beams emitted from the CNTs 150 can be concentrated to the central region of the auxiliary electrode 140 having a cross form.

Figure 4B is a conceptual view showing a locus of an electron beam of the FED device.

As shown in Figure 4B, it is noted that electron beams emitted from the CNTs 150 of the FED device are concentrated to the central region of the outriggers of the auxiliary electrode 140. Since field generated by the auxiliary electrode 140 is also generated from the side of the outrigger, electrons mostly emitted from the end surfaces of both sides of the CNT 150 are induced to the direction of the outrigger of the auxiliary electrode 140. Thus, by using the auxiliary electrode 140, electron beams can be concentrated into the cell region by the field changed according to the structure of the outrigger, and thus, beam interference among neighboring cells can be prevented and luminance can be heightened.

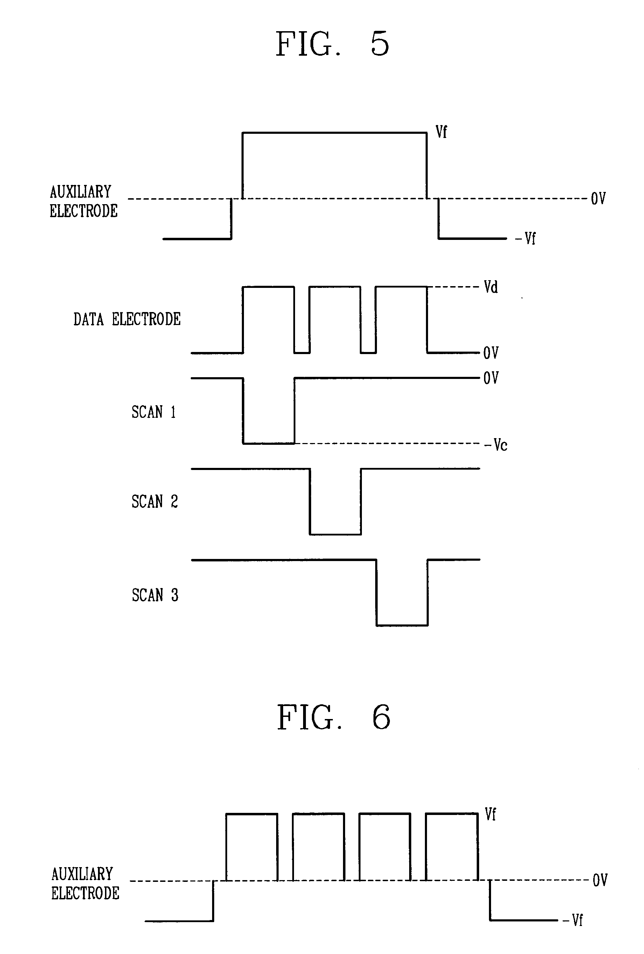

Figure 5 shows voltage waveforms showing one method for driving the FED device in accordance with the first embodiment of the present invention.

As shown in Figure 5, when the FED device is driven and electrons are emitted, the auxiliary electrode 140 generates auxiliary field to excite electrodes emitted from the CNTs 150 to enhance luminance.

If the CNT is affected by high anode field because the FED device is not driven, a negative voltage is applied to the auxiliary electrode 140 to restrain electron emission of the CNTs 150, thereby preventing a phenomenon that electron beams are abnormally generated.

For example, while a data voltage Vd is being applied to the gate electrode (data electrode) 110 and a scan electrode pulse (-Vc) is sequentially supplied to the cathode electrodes (scan electrodes) 130 (namely, while the scan pulses are being applied), a positive voltage Vf is applied to the auxiliary electrode 140, and while the FED device is not driven because scan pulses are not applied, the negative voltage (-Vf) is applied to the auxiliary electrode 140. Herein, the size of the positive voltage and the size of the negative voltage can differ.

When the positive voltage (Vf) is applied to the auxiliary electrode 140, supplementary field is generated besides the field generated by the voltage Vd) for driving the FED device, enhancing efficiency of the field emission, and electron beams can be concentrated into the cell by virtue of the outriggers of the auxiliary electrode 140.

While the FED device is not driven, the negative voltage (-Vf) not greater than 0V is applied to the auxiliary electrode 140 to offset field applied at the anode electrode and the cathode electrode 130 (scan electrode) or form reverse field, whereby a phenomenon that electron beams are abnormally generated by the high anode field can be prevented.

Figure 6 shows a voltage waveform showing another method for driving the FED device in accordance with the first embodiment of the present invention.

As shown in Figure 6, a pulse in synchronization with a data pulse applied to the gate electrode 110 is applied to the auxiliary electrode 140. While the cathode electrodes 130 are sequentially operated, a pulse voltage between a positive voltage (Vf) and a ground voltage (0V) can be applied to the auxiliary electrode 140 or a negative voltage (-Vf) instead of the ground voltage can be applied thereto. In this respect, however, if the ground voltage is applied to the auxiliary electrode 140, the positive voltage (Vf) does not need to be continuously applied, so power consumption can be reduced.

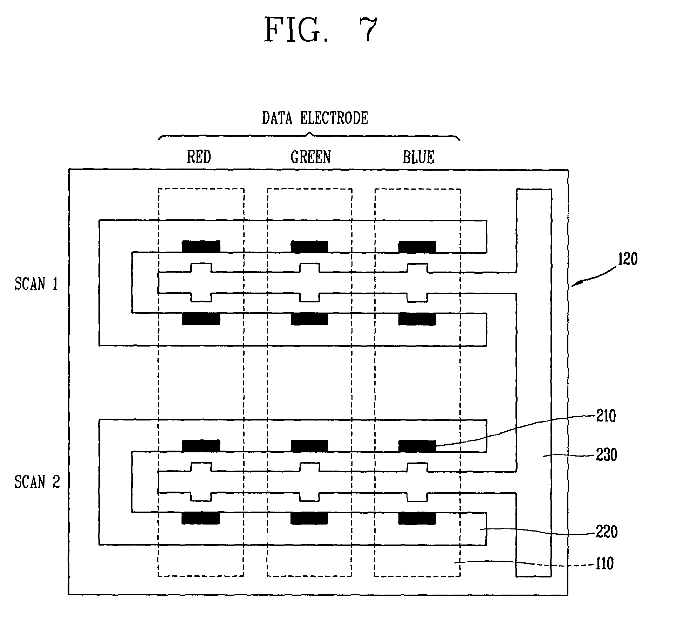

Figure 7 is a plan view showing the construction of an FED device in accordance with a second embodiment of the present invention.

As shown in Figure 7, an FED device in accordance with the second embodiment of the present invention includes: a gate electrode (data electrode) 110 formed on a lower glass substrate (not shown); an insulation layer 120 formed on the gate electrode 110; a cathode electrode 220 formed on the insulation layer 120, crossing the gate electrode 110 and having a pair of electrodes connected to one scan line (e.g., scan line 1); CNTs 210 formed on the cathode electrode 220 and having a smaller length than the gate electrode 110; and an auxiliary electrode 230 formed parallel to the cathode electrode 220 and having an outrigger formed with a smaller length than the CNTs 210. The auxiliary electrode 230 is formed adjacent between the pair of electrodes 220.

One side of the pair of electrodes 220 is electrically connected to each other and connected to one scan line. Each CNT 210 is positioned facing the outrigger of the auxiliary electrode 230 and formed on a boundary surface of the pair of electrodes 220. The auxiliary electrode 230 is formed on the insulation layer 120.

The structure of the FED device in accordance with the second embodiment of the present invention will be described as follows. The same structure as that of the FED device in accordance with the first embodiment of the present invention will be omitted.

First, the cathode electrode (a pair of electrodes) 220 crossing the gate electrode 110 in a vertical direction are formed on the insulation layer 120 and electrically connected with one scan line (e.g., scan line 1).

The auxiliary electrode 230 is formed between the pair of electrodes 220, and the CNTs 210 formed on the boundary surfaces of the pair of electrodes 220 is positioned to face the outrigger of the auxiliary electrode 230. Herein, the CNT 210 is formed shorter than the gate electrode 110.

Regardless of existence or non-existence of the outrigger, when a positive voltage is applied to the auxiliary electrode 230 while the FED device is being driven (namely, while the scan electrode is sequentially driven), electrons emitted from the CNT 210 can be excited through field generated from the auxiliary electrode 230, to thereby enhance luminance. In addition, while the FED device is not driven, a ground voltage or a negative voltage can be applied to the auxiliary electrode 230, to thereby restrain electron emission from the CNT 210.

By forming more outriggers protruded in the direction of the CNT 210 at the auxiliary electrode 230, the area of the insulation layer 120 exposed between the auxiliary electrode 230 and the cathode electrode 220 can be reduced to prevent a phenomenon that electric charges are charged to or discharged from the insulation layer 120. In addition, by concentrating electrons emitted from the end surface of the CNT 210 to the direction of the outrigger of the auxiliary electrode 230, a phenomenon that electron beams spread to neighboring cells can be prevented.

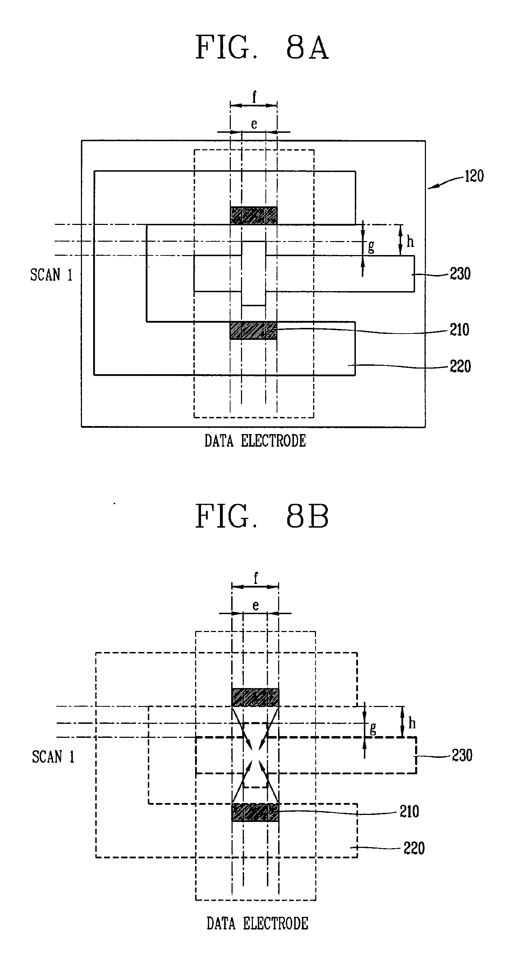

A method for concentrating electron beams emitted from the CNTs 210 will be described in detail with reference to Figures 8A and 8B as follows.

Figure 8A is an enlarged view showing the structure of an FED device in accordance with the second embodiment of the present invention.

As shown in Figure 8A, as for a disposition structure of the pair of electrodes 220, the auxiliary electrode 230 and the CNT 210, the CNTs are formed on the boundary surface of the pair of electrically connected electrodes 220 in the direction of facing the outrigger of the auxiliary electrode 230. The length (f) of the CNT 210 is shorter than the gate electrode 110.

The outrigger of the auxiliary electrode 230 is extended in the direction of the CNT 210 and the length (e) of the outrigger is shorter than the length (f) of the CNT 210. The distance (g) between the outrigger and the cathode electrode 220 is shorter than the distance (h) between the auxiliary electrode 230 and the cathode electrode 220 to reduce the area of the insulation layer 120 exposed at the environment where field is actually generated, whereby electric charges cannot be charged to or discharged from the insulation layer 120 and electron beams emitted from the CNTs 210 can be concentrated to the central region of the auxiliary electrode 230 having a cross form.

Figure 8B is a conceptual view showing a locus of an electron beam of the FED device in accordance with the second embodiment of the present invention.

As shown in Figure 8B, it is noted that electron beams can be concentrated to the central region of the outrigger of the auxiliary electrode 230.

Since field generated by the auxiliary electrode 230 is also generated from the side of the outrigger, electrons mostly emitted from the end surfaces of both sides of the CNT 210 are induced to the direction of the outrigger of the auxiliary electrode 140. Thus, by using the auxiliary electrode 230, electron beams can be concentrated into the cell region by the field changed according to the structure of the outrigger, and thus, beam interference among neighboring cells can be prevented and luminance can be heightened. Herein, the voltage applied to the auxiliary electrode 230 is the same as the auxiliary electrode 140 of the first embodiment of the present invention, description which is thus omitted.

Thus, in the FED device in accordance with the second embodiment of the present invention, by forming the pair of electrodes 220, the auxiliary electrode 230 disposed between the pair of electrodes 220 and the CNT 210 on the pair of electrodes adjacent to the auxiliary electrode 230, the phenomenon of spreading electron beams can be prevented, luminance can be enhanced, and the distortion phenomenon and the phenomenon of abnormally emitting electron beams can be also prevented.

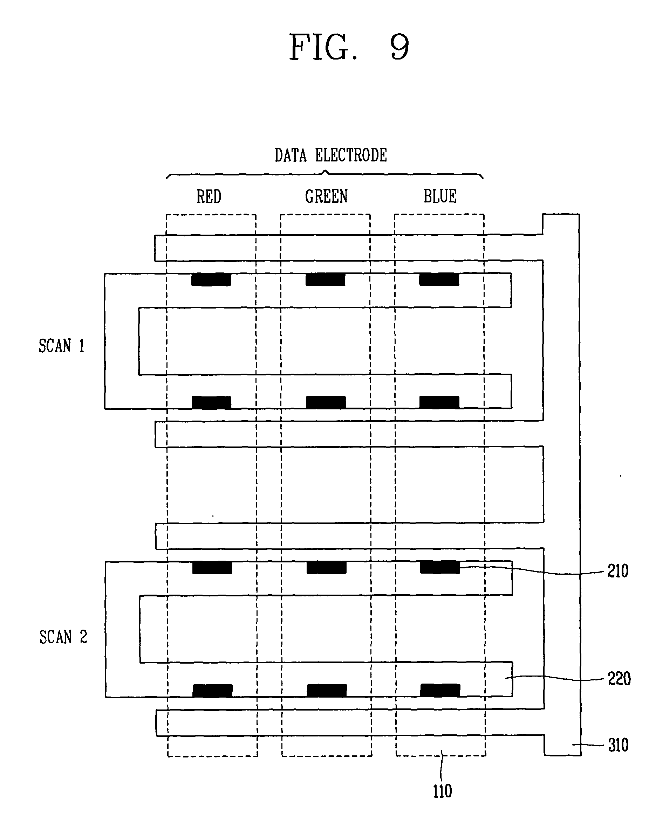

Figure 9 is a plan view showing the construction of an FED device in accordance with a third embodiment of the present invention. An auxiliary electrode of an FED device in accordance with the third embodiment of the present invention does not have an outrigger but it can have an outrigger with a length shorter than the CNT.

As shown in Figure 9, the FED device includes a gate electrode (data electrode) 110 and an insulation layer 120 sequentially formed on a lower glass substrate (not shown); a cathode electrode 220 formed on the insulation layer 120, crossing the gate electrode, and having a pair of electrodes connected to one scan line (e.g., scan 1); CNTs 210 formed on the pair of electrodes 220 and having a length smaller than the gate electrode 110; and an auxiliary electrode 310 formed parallel to the pair of electrodes 220 and formed adjacently outside the pair of electrodes 220.

The CNT 210 is formed at a boundary surface of the cathode electrode 220 to face the auxiliary electrode 310.

Electron beams are concentrated into a cell by the auxiliary electrode 310 and the length of the CNT 21 is formed smaller than the gate electrode 110, thereby preventing spreading of electron beams to adjacent cells.

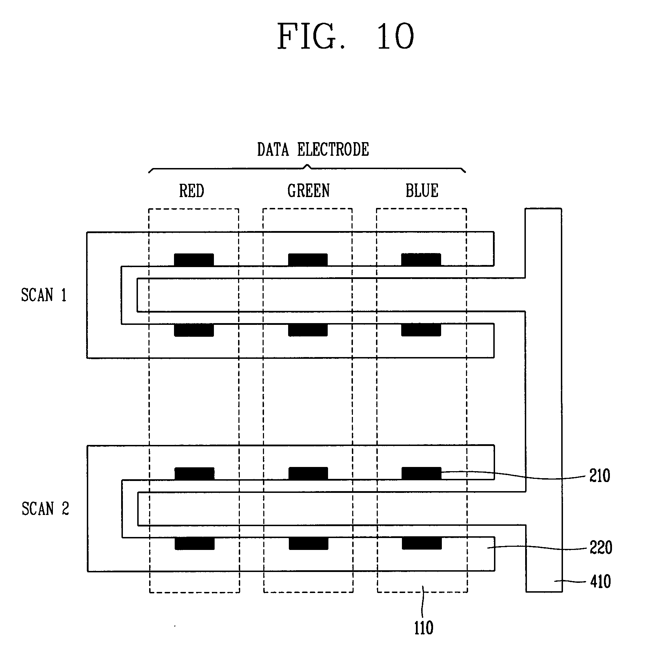

Figure 10 is a plan view showing the construction of an FED device in accordance with a fourth embodiment of the present invention.

As shown in Figure 10, the FED device in accordance with the fourth embodiment of the present invention includes a gate electrode (data electrode) 110 and an insulation layer 120 sequentially formed on a lower glass substrate (not shown); a cathode electrode 220 formed on the insulation layer 120, crossing the gate electrode, and having a pair of electrodes connected to one scan line (e.g., scan 1); CNTs 210 formed on the pair of electrodes 220 and having a length smaller than the gate electrode 110; and an auxiliary electrode 410 formed parallel to the pair of electrodes 220 and formed between the pair of electrodes 220 adjacently.

Though the auxiliary electrode 410 does not have an outrigger, since the cathode electrode 220 and the CNT 210 are formed at both sides of the auxiliary electrode 410 positioned at the central region of the cell region, electron beams are concentrated to the center (auxiliary electrode region) of the cell region, and thus, contrast and luminance of the FED can be enhanced.

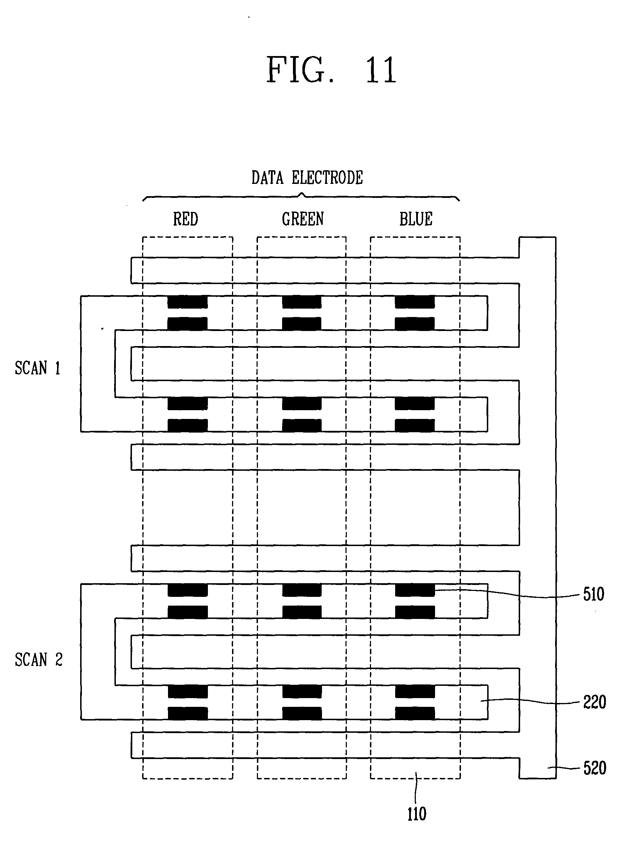

Figure 11 is a plan view showing the construction of FED device in accordance with a fifth embodiment of the present invention.

As shown in Figure 11, the FED device in accordance with the fifth embodiment of the present invention includes a gate electrode (data electrode) 110 and an insulation layer 120 sequentially formed on a lower glass substrate (not shown); a cathode electrode 220 formed on the insulation layer 120, crossing the gate electrode, and having a pair of electrodes connected to one scan line (e.g., scan 1); CNTs 510 formed on the cathode electrode 220 and having a length smaller than the gate electrode 110; and an auxiliary electrode 520 formed parallel to the pair of cathode electrodes 220 and formed between and outside the pair of electrodes 220 adjacently. An outrigger can be formed at the auxiliary electrode 520.

In the FED device in accordance with the fifth embodiment of the present invention, the auxiliary electrode is formed outside the pair of electrodes 220 and also between the pair of electrodes 220. Because the auxiliary electrode 520 is adjacent to both sides of the pair of electrodes 220, the pair of CNTs 510 can be formed at each electrode 220. Thus, total four CNTs 510 are formed at one cell, and electron beams emitted from four CNTs 510 are concentrated in the direction of the auxiliary electrode 520 facing each CNT 510. Namely, luminance and efficiency can be remarkably enhanced without beam interference among neighboring cells.

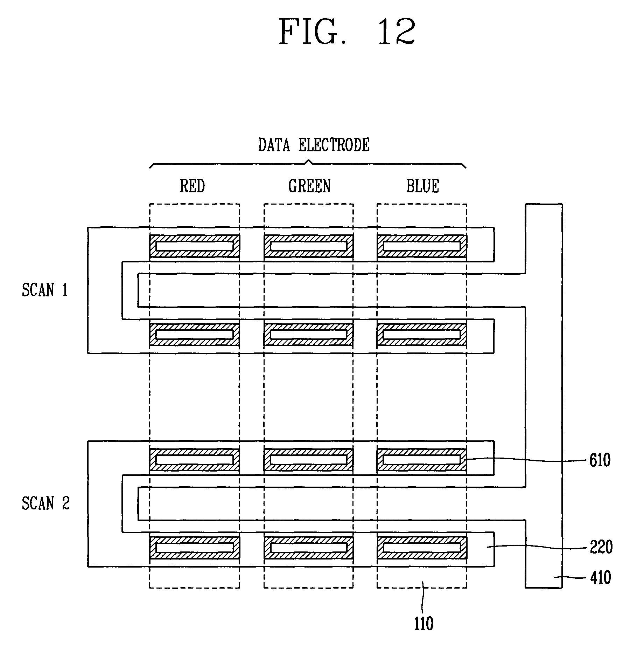

Figure 12 is a plan view showing the construction of FED device in accordance with a sixth embodiment of the present invention.

As shown in Figure 12, the FED device in accordance with the sixth embodiment of the present invention includes a gate electrode (data electrode) 110 and an insulation layer 120 sequentially formed on a lower glass substrate (not shown); a cathode electrode 220 formed on the insulation layer 120, crossing the gate electrode, and having a pair of electrodes connected to one scan line (e.g., scan 1); CNTs 610 formed on the pair of electrodes 220, having the same length as the gate electrode 110, and having an empty space; and an auxiliary electrode 410 formed parallel to the pair of electrodes 220 and formed between the pair of electrodes 220 adjacently.

In the FED device in accordance with the sixth embodiment of the present invention, the CNTs 610 includes an empty rectangular form, instead of a filled rectangular form, so that more electrons can be generated from the CNTs 610.

An outrigger can be additionally formed at the auxiliary electrode 410 of the FED device in accordance with the sixth embodiment of the present invention.

As so far described, the FED devices in accordance with the embodiments of the present invention have many advantages.

That is, for example, by forming the auxiliary electrode and the CNTs on at least one cathode electrode positioned adjacent to the auxiliary electrode, the phenomenon of spreading electron beams can be prevented, the distortion phenomenon, and the phenomenon of abnormally emitting electron beams can be prevented. In addition, beam interference among neighboring cells is prevented, and luminance and efficiency can be considerably enhanced. Consequently, display quality of the FED can be enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A field emission display (FED) device comprising:
a gate electrode and an insulation layer sequentially formed on a substrate;
a cathode electrode formed on the insulation layer and crossing the gate electrode;
a carbon nano tube (CNT) formed on the cathode electrode and having a smaller length than the gate electrode; and
an auxiliary electrode formed parallel to the cathode electrode.

2. The device of claim 1, wherein the auxiliary electrode has an outrigger formed with a smaller length than the CNT.

3. The device of claim 2, wherein the outrigger is extended from the auxiliary electrode and formed adjacent to the CNT.

4. The device of claim 3, wherein the CNT is formed at boundary surfaces of both sides of the cathode electrode and positioned to face the outrigger of the auxiliary electrode.

5. The device of claim 1, wherein auxiliary electrodes are electrically connected to form a single electrode.

6. The device of claim 1, further comprising:
an upper glass substrate;
an anode electrode formed on the upper glass substrate; and
a phosphor layer formed on the anode electrode.

7. The device of claim 1, wherein when the FED device is driven, a positive voltage is applied to the auxiliary electrode, and when the FED device is not driven, a ground voltage or a negative voltage is applied to the auxiliary electrode.

8. The device of claim 7, wherein the positive voltage is applied to the auxiliary electrode while a voltage is being applied to the gate electrode.

9. The device of claim 7, wherein the positive voltage and the negative voltage are applied in a pulse form to the auxiliary electrode.

10. The device of claim 7, wherein the cathode electrode includes a pair of electrodes and the pair of electrodes are electrically connected at one side thereof.

11. The device of claim 10, wherein the pair of electrodes are electrically connected to one scan line.

12. The device of claim 10, wherein the auxiliary electrode is disposed between the pair of electrodes.

13. The device of claim 12, wherein the auxiliary electrode has an outrigger formed with a smaller length than the CNT.

14. The device of claim 13, wherein the outrigger is extended from the auxiliary electrode and formed adjacent to the CNT.

15. The device of claim 10, wherein the auxiliary electrode is disposed at an outer side of the pair of electrodes.

16. The device of claim 10, wherein the auxiliary electrode is disposed between the pair of electrodes and the outer side of the pair of electrodes.

17. The device of claim 16, wherein the auxiliary electrode has an outrigger formed with a smaller length than the CNT.

18. The device of claim 10, wherein the CNT are formed at boundary surfaces of both sides of the pair of electrodes and positioned to face the auxiliary electrode.

19. The device of claim 1, wherein the CNT has a rectangular form with no empty space inside thereof or a rectangular form with an empty space therein.

20. The device of claim 1, wherein when the FED device is driven, a pulse in synchronization with a data pulse applied to the gate electrode is applied to the auxiliary electrode.

21. A field emission display (FED) device comprising:
a gate electrode and an insulation layer sequentially formed on a substrate;
a cathode electrode formed on the insulation layer, crossing the gate electrode and having a pair of electrodes;
a carbon nano tube (CNT) formed on each of the pair of electrodes and having a smaller length than the gate electrode; and
an auxiliary electrode formed parallel to the pair of electrodes and having an outrigger formed with a smaller length than the CNT,
wherein one side of the pair of electrodes is electrically connected with each other and the outrigger is extended from the auxiliary electrode so as to be adjacent to the CNT.

22. The device of claim 21, wherein the pair of electrodes are connected to one scan line.

23. The device of claim 22, wherein the auxiliary electrode is disposed between the pair of electrodes.

24. The device of claim 22, wherein the auxiliary electrode is disposed at an outer side of the pair of electrodes.

25. The device of claim 22, wherein the auxiliary electrode is disposed between the pair of electrodes and at the outer side of the pair of electrodes.

26. A field emission display (FED) device comprising:
an upper glass substrate;
an anode electrode formed on the upper glass substrate;
a phosphor layer formed on the anode electrode;
a gate electrode formed on the lower glass substrate;
an insulation layer formed on the gate electrode;
a cathode electrode formed on the insulation layer, crossing the gate electrode and having a pair of electrodes, one side of the pair of electrodes being electrically connected to each other;
a carbon nano tube (CNT) formed on a boundary surface of the pair of electrodes and having a smaller length than the gate electrode; and
an auxiliary electrode formed parallel to the pair of electrodes and having an outrigger formed with a smaller length than the CNT,
wherein the outrigger is extended from the auxiliary electrode so as to be adjacent to the CNT, and the CNT is formed on both boundary surfaces of the pair of electrodes so as to face the auxiliary electrode.
